# EUROPÄISCHE PATENTSCHRIFT

(11) **EP 3 464 851 B1**
(45) Veröffentlichungstag und Bekanntmachung des Hinweises auf die Patenterteilung: **22.01.2020**
(21) Anmeldenummer: 17724529.7
(22) Anmeldetag: 15.05.2017
(51) Int. Cl.: F02B 75/04, F16K 11/07

(54) **UMSCHALTVENTIL ZUM STEUERN EINES HYDRAULIKFLÜSSIGKEITSSTROMS UND PLEUEL FÜR EINE BRENNKRAFTMASCHINE MIT VARIABLER VERDICHTUNG MIT EINEM UMSCHALTVENTIL**
SWITCHOVER VALVE FOR CONTROLLING A HYDRAULIC FLUID FLOW, AND CONNECTING ROD FOR A VARIABLE-COMPRESSION INTERNAL COMBUSTION ENGINE HAVING A SWITCHOVER VALVE
SOUPAPE DE COMMUTATION SERVANT À COMMANDER UN FLUX DE LIQUIDE HYDRAULIQUE ET BIELLE POUR UN MOTEUR À COMBUSTION INTERNE À COMPRESSION VARIBALE COMPRENANT UNE SOUPAPE DE COMMUTATION

(30) Priorität: 01.06.2016 DE 102016110127; 11.08.2016 DE 102016114953
(43) Veröffentlichungstag der Anmeldung: 10.04.2019
(73) Patentinhaber: ECO Holding 1 GmbH, 97828 Marktheidenfeld (DE)
(72) Erfinder: BALLING, Manfred, 97072 Würzburg (DE); SCHULZE, Dietmar, 35516 Münzenberg (DE)
(86) Internationale Anmeldenummer: PCT/EP2017/061619
(87) Internationale Veröffentlichungsnummer: WO 2017/207255

(56) Entgegenhaltungen:
- DE-A1-102012 112 461
- DE-A1-102013 103 685
- DE-A1-102014 116 655
- US-A- 2 989 954

## Beschreibung

### Technisches Gebiet

Die Erfindung betrifft ein Umschaltventil zum Steuern eines Hydraulikflüssigkeitsstroms, insbesondere für ein Pleuel für eine Brennkraftmaschine mit variabler Verdichtung mit einer Exzenter-Verstelleinrichtung zur Verstellung einer effektiven Pleuelstangenlänge. Ferner betrifft die Erfindung ein Pleuel mit einem derartigen Umschaltventil.

### Stand der Technik

Bei Brennkraftmaschinen wirkt sich ein hohes Verdichtungsverhältnis positiv auf den Wirkungsgrad der Brennkraftmaschine aus. Unter Verdichtungsverhältnis wird im Allgemeinen das Verhältnis des gesamten Zylinderraumes vor der Verdichtung zum verbliebenen Zylinderraum nach der Verdichtung verstanden. Bei Brennkraftmaschinen mit Fremdzündung, insbesondere Ottomotoren, die ein festes Verdichtungsverhältnis aufweisen, darf das Verdichtungsverhältnis jedoch nur so hoch gewählt werden, dass bei Volllastbetrieb ein sogenanntes "Klopfen" der Brennkraftmaschine vermieden wird. Jedoch könnte für den weitaus häufiger auftretenden Teillastbereich der Brennkraftmaschine, also bei geringer Zylinderfüllung, das Verdichtungsverhältnis mit höheren Werten gewählt werden, ohne dass ein "Klopfen" auftreten würde. Der wichtige Teillastbereich einer Brennkraftmaschine kann verbessert werden, wenn das Verdichtungsverhältnis variabel einstellbar ist. Zur Verstellung des Verdichtungsverhältnisses sind beispielsweise Systeme mit variabler Pleuelstangenlänge bekannt, welche mit Hilfe von hydraulisch oder mechanisch betätigbaren Umschaltventilen eine Exzenter-Verstelleinrichtung eines Pleuels betätigen.

Ein gattungsgemäßes Umschaltventil ist beispielsweise aus der DE 10 2012 112 461 A1 zu entnehmen. Ein Abgriffselement des darin beschriebenen Umschaltelements ist mittels einer Rastkugel und einer Feder in zwei Schaltstellungen arretierbar, wobei die Rastkugel mit zwei in dem Abgriffselement ausgebildeten Rastnuten zusammenwirkt.

### Offenbarung der Erfindung

Der Aufbau des bekannten Umschaltventils wird als aufwendig und damit kostenintensiv angesehen. Daher ist es Aufgabe der Erfindung, ein dahingehend verbessertes Umschaltventil und ein Pleuel mit einem verbesserten Umschaltventil zu schaffen.

Die vorgenannten Aufgaben werden nach einem Aspekt der Erfindung gelöst mit den Merkmalen der unabhängigen Ansprüche.

Günstige Ausgestaltungen und Vorteile der Erfindung ergeben sich aus den weiteren Ansprüchen, der Beschreibung und der Zeichnung.

Es wird ein Umschaltventil zum Steuern eines Hydraulikflüssigkeitsstroms vorgeschlagen, mit einem in einem Ventilgehäuse angeordneten Abgriffselement, welches wahlweise in eine erste Schaltstellung oder eine zweite Schaltstellung verlagerbar und mittels eines federbeaufschlagten Rastelementes wahlweise in der ersten oder der zweiten Schaltstellung arretierbar ist. Dabei ist in der ersten Schaltstellung ein erster Hydraulikanschluss mit einem Entlastungsanschluss und in der zweiten Schaltstellung ein zweiter Hydraulikanschluss mit dem Entlastungsanschluss verbunden, wobei ein Schaltweg des Abgriffselements begrenzt vorgesehen ist.

Erfindungsgemäß ist das Rastelement wenigstens teilweise in einer Ausnehmung des Abgriffselements angeordnet, wobei das Ventilgehäuse in einer axialen Richtung eine axial begrenzte erste Nut aufweist, in welcher das Rastelement axial verschiebbar angeordnet ist.

Das erfindungsgemäße Umschaltventil weist ein in einem Ventilgehäuse angeordnetes Abgriffselement auf, welches wahlweise in eine erste Schaltstellung oder eine zweite Schaltstellung verlagerbar und mittels eines federbeaufschlagten Rastelementes wahlweise in der ersten oder der zweiten Schaltstellung arretierbar ist. Wie bei bekannten Umschaltventilen kann vorteilhaft in der ersten Schaltstellung ein erster Hydraulikanschluss des Umschaltventils, welcher zu einer ersten Hydraulikkammer eines Pleuels führen kann, mit einem Entlastungsanschluss des Umschaltventils, welcher zu einer Entlastungsleitung eines Pleuels führen kann, verbunden sein. In der zweiten Schaltstellung kann vorteilhaft der zweite Hydraulikanschluss, welcher zu einer zweiten Hydraulikkammer des Pleuels führen kann, mit dem Entlastungsanschluss, welcher zu der Entlastungsleitung führen kann, verbunden sein. Der Schaltweg des Abgriffselements ist dabei begrenzt vorgesehen.

Das Ventilgehäuse weist erfindungsgemäß eine erste als Axialnut ausgeführte Nut auf, in welcher das Rastelement zur Begrenzung des Schaltweges und zur Verdrehsicherung des Abgriffselements axial verschiebbar angeordnet ist. Die zumindest teilweise Anordnung des Rastelementes in der Ausnehmung ist von Vorteil, da die Führungslänge des beweglichen Rastelementes im Vergleich zu den bekannten Umschaltventilen entscheidend vergrößert werden kann. Die Verkantungsneigung und Selbsthemmungsneigung kann verringert und ein sicheres Erreichen der Endlagen aus eigener Kraft verbessert werden. Zudem ist die Federauslegung wegen größerer Einbaulänge im Vergleich zum Stand der Technik nicht kritisch. Das Rastelement kann zusätzlich als Anschlagelement dienen, welches somit als zusätzliches Bauteil entfallen kann. Vorteilhaft sind so bei dem erfindungsgemäßen Umschaltventil die Funktionen Rastelement und Anschlagelement in einem Bauteil zusammengefasst. Am Abgriffselement ist somit nur eine Bohrung zur Aufnahme des Rastelements sowie ein Schaltkanal zum Leiten des Hydraulikflüssigkeitsstroms zwischen den Hydraulikanschlüssen und dem Entlastungsanschluss vorzusehen. Dadurch ist eine vereinfachte Fertigung des Abgriffselements möglich und es steht mehr Raum für die Optimierung von Dichtstrecken im Umschaltventil zur Verfügung, da am Außenumfang des Abgriffselements mehr freie Fläche zur Verfügung steht. Vorteilhaft kann das Rastelement wenigstens teilweise in einer quer zur bestimmungsgemäßen Verschieberichtung des Abgriffselements ausgebildeten Ausnehmung des Abgriffselements angeordnet sein. Insbesondere kann eine im Inneren des Rastelements angeordnete Feder zur Beaufschlagung des Rastelements mit Federkraft vorgesehen sein.

Gemäß einer vorteilhaften Ausgestaltung kann das Rastelement mit einem Rastkonturelement zusammenwirken, welches im oder am Ventilgehäuse angeordnet ist. Die für das Arretieren des Abgriffselements in den Schaltstellungen notwendige Rastkontur ist damit nicht wie im Stand der Technik am Abgriffselement, sondern an einem separaten Bauteil vorgesehen, so dass das Abgriffselement dadurch wesentlich einfacher und kostengünstiger herstellbar ist. Das Rastkonturelement wiederum kann als separates Bauteil relativ einfach gestaltet sein, so dass es leicht zu fertigen ist.

Gemäß einer vorteilhaften Ausgestaltung kann das Rastelement mit dem Abgriffselement axial verschiebbar vorgesehen sein. Das Rastelement kann vorteilhaft wenigstens teilweise in das Abgriffselement integriert vorgesehen sein, so dass Abgriffselement und Rastelement gemeinsam axial verschoben werden können. Die Integration des Rastelements in das Abgriffselement vereinfacht die Montage des Umschaltventils in vorteilhafter Weise.

Gemäß einer vorteilhaften Ausgestaltung kann das Rastkonturelement im Bereich der ersten Nut angeordnet sein. Auf diese Weise kann das Rastkonturelement vorteilhaft dem Rastelement benachbart angeordnet sein, wodurch ein Zusammenwirken von Rastelement und Rastkonturelement leichter ermöglicht werden kann. Dadurch lässt sich auch ein geringer Hub des federbelasteten Rastelements und somit ein schnelles Umschalten von einer

Gemäß einer vorteilhaften Ausgestaltung kann das Rastkonturelement wenigstens zwei Rastpositionen für das Rastelement aufweisen. Damit lassen sich zwei Schaltstellungen des Umschaltventils günstig realisieren, in denen das Rastelement in den Rastpositionen verrastet ist. Eine Rastkontur, welche in dem Rastkonturelement ausgebildet ist, kann die zwei Rastpositionen zuverlässig voneinander getrennt darstellen.

Gemäß einer vorteilhaften Ausgestaltung kann das Ventilgehäuse im Bereich der ersten Nut eine zweite Nut aufweisen, in welcher das Rastkonturelement angeordnet ist. Das Ventilgehäuse kann im Bereich der ersten, als Axialnut ausgeführten Nut an seiner Außenkontur eine zweite Nut aufweisen, in welcher das Rastkonturelement angeordnet ist und welche sich vorteilhaft in axialer Länge über die erste Nut hinaus erstrecken kann. Das Rastkonturelement wird vor der Montage des Umschaltventils in die zweite Nut eingelegt, so dass die Abstützung der Federvorspannung, welche eine Kontaktkraft zwischen Rastelement und Rastkonturelement darstellt, erst im eingebauten Zustand von einer das Ventilgehäuse aufnehmenden Pleuelbohrung übernommen wird. Die zweite Nut sichert das Rastkonturelement günstig gegen ein Verschieben. Aufwendige Befestigungsmaßnahmen für das Rastkonturelement sind nicht erforderlich.

Gemäß einer vorteilhaften Ausgestaltung kann das Rastelement eine in einer Rasthülse angeordnete Feder aufweisen. Auf diese Weise lässt sich günstig ein federbeaufschlagtes Rastelement ausführen, da ausreichend Einbauraum für eine Druckfeder vorhanden ist. Die Rasthülse kann vorteilhaft in einer Ausnehmung des Abgriffselements untergebracht werden, so dass für die Feder genügend Raum zur Entspannung vorliegt. Dadurch kann eine Vorspannung der Druckfeder mit genügender Präzision eingestellt werden, um eine vorteilhafte Funktion des Rastelements zu gewährleisten. Die Feder kann in das Innere der Rasthülse eintauchen, wenn sie zusammengedrückt wird. Damit kann das Rastelement bei Verschieben in der ersten Nut federnd einer Rastkontur des Rastelements folgen.

Gemäß einer vorteilhaften Ausgestaltung kann die Rasthülse in der Ausnehmung des Abgriffselements verschiebbar und mit der Feder vorgespannt angeordnet sein. Die Rasthülse kann auf diese Weise beim Zusammendrücken der Feder in die Ausnehmung des Abgriffselements hineingeschoben werden und beim Ausdehnen der Feder wieder aus der Ausnehmung herausgleiten. So kann das Rastelement einer Rastkontur des Rastkonturelements günstig folgen.

Gemäß einer vorteilhaften Ausgestaltung kann die Ausnehmung einen Anschlag für die Rasthülse aufweisen. Damit kann in geeigneter Weise ein Eintauchen der Rasthülse in das Abgriffselement beschränkt werden, womit eine definierte Krafteinstellung für das Rastelement gewährleistet werden kann.

Gemäß einer vorteilhaften Ausgestaltung kann das Rastkonturelement sich über wenigstens eine Länge der ersten Nut des Ventilgehäuses erstrecken. Dadurch ist sichergestellt, dass das Rastkonturelement auch die ganze Länge des Verschiebewegs des Rastelements in der ersten Nut des Abgriffselements abdeckt und das Rastelement so sicher geführt wird.

Gemäß einer vorteilhaften Ausgestaltung kann das Rastkonturelement in die zweite Nut lose eingelegt angeordnet sein. Die Abstützung der Federvorspannung erfolgt dann günstigerweise erst im eingebauten Zustand von einer das Ventilgehäuse aufnehmenden Pleuelbohrung, wodurch sich die Montage des Umschaltventils vorteilhaft gestalten lässt. Alternativ ist jedoch auch möglich, das Rastkonturelement in die zweite Nut einzupressen.

Gemäß einer vorteilhaften Ausgestaltung kann eine Vorspannung der Feder über das Rastkonturelement in einem bestimmungsgemäß montierten Zustand erzeugbar sein. Das Rastkonturelement kann beispielsweise bei Einschieben des Ventilgehäuses mit eingelegtem Rastkonturelement gegen das Rastelement mit Feder drücken, bis das Rastkonturelement in seiner Einbauposition fixiert ist und die Feder des Rastelements so die gewünschte Vorspannung erreicht.

Gemäß einer vorteilhaften Ausgestaltung kann die Rasthülse als Tiefziehteil ausgebildet sein. Dadurch kann die Rasthülse als einfach zu fertigendes Bauteil kostengünstig hergestellt werden. Auch bietet das Tiefziehverfahren eine große Gestaltungsfreiheit der Formgebung in der Spitze der Rasthülse.

Gemäß einer vorteilhaften Ausgestaltung kann das Rastkonturelement als Stanzbiegeteil ausgebildet sein. Auch Stanzbiegen als Fertigungsverfahren für das Rastkonturelement stellt ein kostengünstiges Verfahren mit der nötigen Gestaltungsfreiheit in der Formgebung des Bauteils dar. Alternativ lässt sich auch Stanzprägen als Fertigungsverfahren für das Rastkonturelement günstig einsetzen.

Nach einem weiteren Aspekt der Erfindung wird ein Pleuel für eine Brennkraftmaschine mit variabler Verdichtung mit einer Exzenter-Verstelleinrichtung zur Verstellung einer effektiven Pleuelstangenlänge vorgeschlagen, wobei ein Verstellweg der Exzenter-Verstelleinrichtung mittels eines Umschaltventils verstellbar ist. Die Exzenter-Verstelleinrichtung weist vorteilhaft einen mit einem Exzenterhebel zusammenwirkenden Exzenter aufweist, mit zwei Kolben, welche jeweils in einer Hydraulikkammer verschiebbar geführt sind und in welchen an dem Exzenterhebel angreifende Exzenterstangen der Exzenter-Verstelleinrichtung gelagert sind. Durch die Änderung des Verstellwegs wird die effektive Pleuelstangenlänge geändert. Damit kann die Verdichtung einer Brennkraftmaschine gesteuert werden. Ein solcher Pleuel kann so eine Exzenter-Verstelleinrichtung umfassen, die insbesondere zum Schalten der Stellkolben in dem Pleuel für eine variable Verdichtung einer Brennkraftmaschine vorgesehen ist.

Eine Verdrehung der verstellbaren Exzenter-Verstelleinrichtung wird durch Einwirken von Massen- und Lastkräften der Brennkraftmaschine eingeleitet, die bei einem Arbeitstakt der Brennkraftmaschine auf die Exzenter-Verstelleinrichtung wirken. Während eines Arbeitstaktes verändern sich die Wirkungsrichtungen der auf die Exzenter-Verstelleinrichtung wirkenden Kräfte kontinuierlich. Die Drehbewegung oder Verstellbewegung wird durch mit Hydraulikflüssigkeit, insbesondere mit Motoröl, beaufschlagte, im Pleuel integrierte Kolben unterstützt. Die Kolben verhindern ein Rückstellen der Exzenter-Verstelleinrichtung aufgrund variierender Kraftwirkungsrichtungen der auf die Exzenter-Verstelleinrichtung wirkenden Kräfte.

Die Kolben sind in Hydraulikkammern verschiebbar angeordnet und über Hydraulikflüssigkeitsleitungen mit Hydraulikflüssigkeit beaufschlagt. Diese verhindern dabei ein Rückfließen der Hydraulikflüssigkeit aus den Hydraulikkammern zurück in die Hydraulikflüssigkeitsleitungen. Die mit den Hydraulikkammern verbundenen Hydraulikflüssigkeitsleitungen wirken wenigstens teilweise mit dem erfindungsgemäßen Umschaltventil zusammen.

Gemäß einer vorteilhaften Ausgestaltung kann die Exzenter-Verstelleinrichtung wenigstens zwei Hydraulikkammern aufweisen, wobei in einer ersten Schaltstellung des Umschaltventils die erste Hydraulikkammer mit einer Entlastungsleitung und in einer zweiten Schaltstellung des Umschaltventils die zweite Hydraulikkammer mit der Entlastungsleitung verbunden ist. Die Entlastungsleitung stellt die Verbindung zu einer Versorgung des Pleuels mit Hydraulikflüssigkeit, beispielsweise über eine Nut in einem Hublagerauge des Pleuels dar.

### Kurze Beschreibung der Zeichnungen

Weitere Vorteile ergeben sich aus der folgenden Zeichnungsbeschreibung. In den Zeichnungen ist ein Ausführungsbeispiel der Erfindung schematisch dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

### Es zeigen beispielhaft:

- Fig. 1: ein erfindungsgemäßes Pleuel in isometrischer Darstellung;
- Fig. 2: ein Umschaltventil nach einem Ausführungsbeispiel der Erfindung in isometrischer Darstellung;
- Fig. 3: das Umschaltventil aus Fig. 2 im Längsschnitt;
- Fig. 4: das Umschaltventil aus Fig. 2 im Querschnitt;
- Fig. 5: das Ventilgehäuse des Umschaltventils aus Fig. 2 in isometrischer Darstellung;
- Fig. 6: das Ventilgehäuse aus Fig. 5 in Längsrichtung um 90° gedreht;
- Fig. 7: das Rastkonturelement des Umschaltventils in isometrischer Darstellung;
- Fig. 8: das Abgriffselement des Umschaltventils in isometrischer Darstellung; und
- Fig. 9: das Abgriffselement aus Fig. 8 in Längsrichtung um 90° gedreht.

### Ausführungsformen der Erfindung

In den Figuren sind gleiche oder gleichartige Komponenten mit gleichen Bezugszeichen beziffert. Die Figuren zeigen lediglich Beispiele und sind nicht beschränkend zu verstehen.

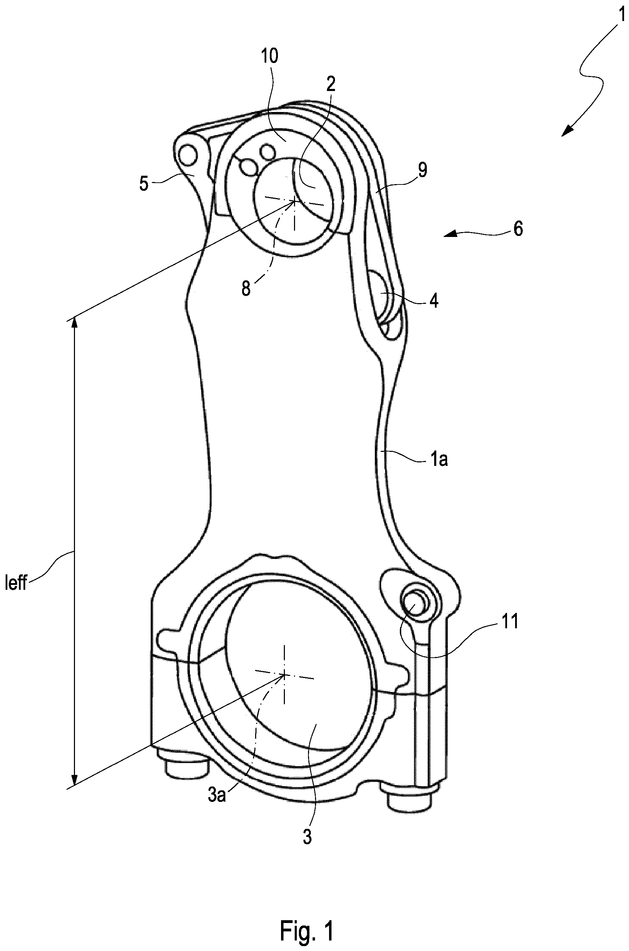

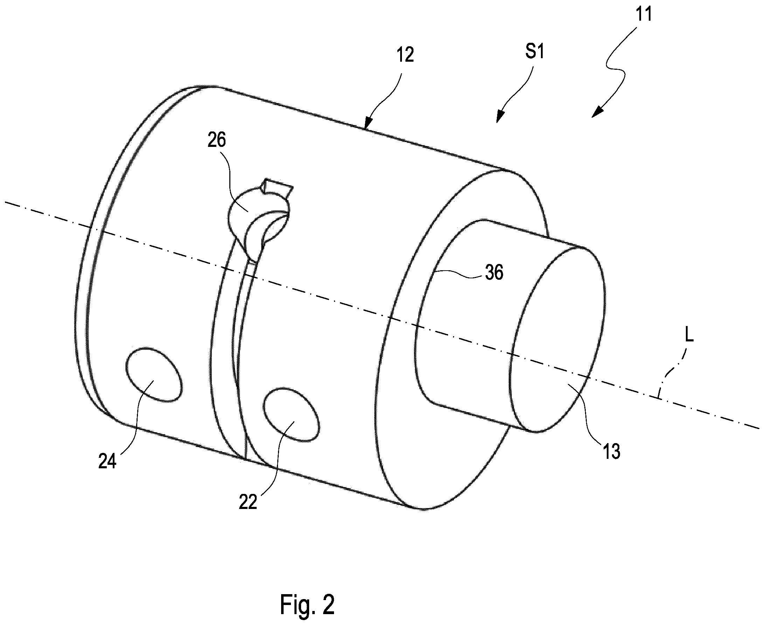

Die Figur 2 bis 9 zeigen verschiedene Ansichten und Schnitte eines erfindungsgemäßen Umschaltventils 11 bzw. von Einzelteilen des Umschaltventils 11, welches insbesondere für ein in Figur 1 gezeigtes, bekanntes Pleuel 1 für eine variable Verdichtung einer Brennkraftmaschine vorgesehen ist. Das in Figur 1 dargestellte Pleuel 1 weist eine Pleuelstange 1a und eine zumindest abschnittsweise in einem Pleuellagerauge 2 angeordnete verstellbare Exzenter-Verstelleinrichtung 6 mit einem Exzenter 10 auf. Die Exzenter-Verstelleinrichtung 6 dient zur Verstellung einer effektiven Pleuelstangenlänge leff. Als Pleuelstangenlänge leff ist der Abstand einer Mittelachse 3a eines Hublagerauges 3 zu einer Mittelachse 8 des Pleullagerauges 2 definiert.

Eine Verdrehung der verstellbaren Exzenter-Verstelleinrichtung 6 wird durch Einwirken von Massen- und Lastkräften der Brennkraftmaschine eingeleitet, die bei einem Arbeitstakt der Brennkraftmaschine auf die Exzenter-Verstelleinrichtung 6 wirken. Während eines Arbeitstaktes verändern sich die Wirkungsrichtungen der auf die Exzenter-Verstelleinrichtung 6 wirkenden Kräfte kontinuierlich. Die Drehbewegung oder Verstellbewegung wird durch mit Hydraulikflüssigkeit, insbesondere mit Motoröl, beaufschlagte, im Pleuel 1 integrierte, nicht dargestellte Kolben unterstützt. Die Kolben verhindern dabei ein Rückstellen der Exzenter-Verstelleinrichtung 6 aufgrund variierender Kraftwirkungsrichtungen der auf die Exzenter-Verstelleinrichtung 6 wirkenden Kräfte.

Die Kolben sind mittels Exzenterstangen 4, 5 beidseitig mit einem Exzenterkörper 9 der Exzentereinrichtung 6 wirkverbunden. Die Kolben sind in Hydraulikkammern verschiebbar angeordnet und über nicht gezeigte Hydraulikflüssigkeitsleitungen von dem Hublagerauge 3 aus mit Hydraulikflüssigkeit über nicht sichtbare Rückschlagventile beaufschlagt. Diese verhindern dabei ein Rückfließen der Hydraulikflüssigkeit aus den Hydraulikkammern zurück in die Hydraulikflüssigkeitsleitungen in eine Lagerschale des Hublagerauges 3 und ermöglichen ein Nachsaugen von Hydraulikflüssigkeit in die Hydraulikkammern. Die mit den Hydraulikkammern verbundenen Hydraulikflüssigkeitsleitungen wirken alle oder wenigstens teilweise mit dem erfindungsgemäßen Umschaltventil 11 zusammen. In einer ersten Schaltstellung S1 des Umschaltventils 11 ist die erste Hydraulikkammer mit einer nicht dargestellten Entlastungsleitung und in einer zweiten Schaltstellung S2 des Umschaltventils 11 die zweite Hydraulikkammer mit der Entlastungsleitung verbunden. Die Entlastungsleitung stellt dabei die Verbindung zu einer Versorgung des Pleuels 1 mit Hydraulikflüssigkeit, beispielsweise über eine Nut in dem Hublagerauge 3 des Pleuels 1 dar.

Das nachfolgend näher beschriebene Umschaltventil 11 kann aber auch für jedes andere Pleuel für eine Brennkraftmaschine mit variabler Verdichtung vorgesehen sein, welche eine Exzenter-Verstelleinrichtung zur Verstellung einer effektiven Pleuelstangenlänge und wenigstens zwei Hydraulikkammern aufweist. Beispielsweise kann die Exzenter-Verstelleinrichtung des Pleuels mit einem sogenannten Schwenkmotor-System ausgebildet sein.

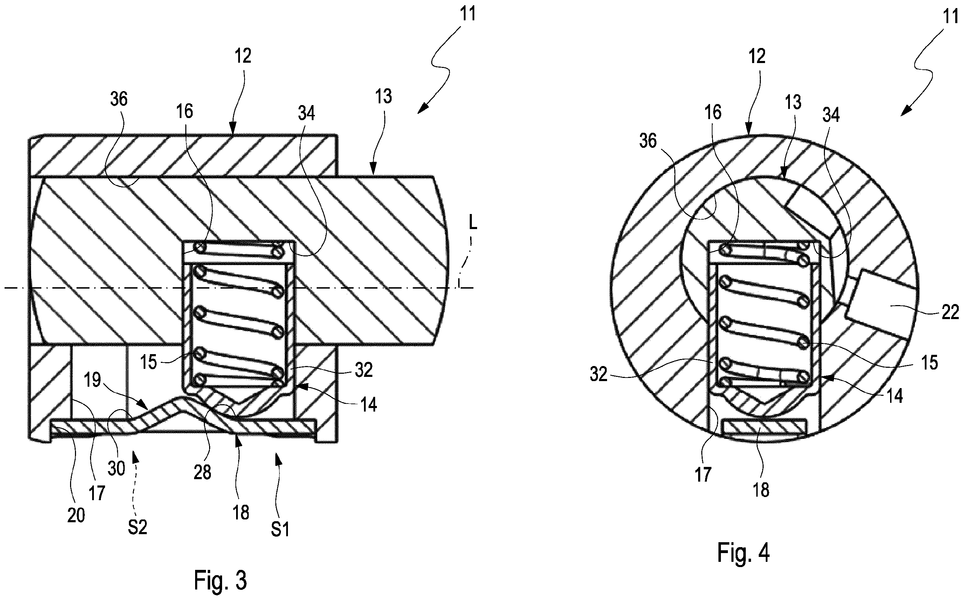

Figur 2 zeigt ein Umschaltventil 11 nach einem Ausführungsbeispiel der Erfindung in isometrischer Darstellung. Das Umschaltventil 11 weist ein in einem Ventilgehäuse 12 angeordnetes Abgriffselement 13 auf, welches in einer axialen Richtung L verschiebbar wahlweise in eine erste Schaltstellung S1 (in Figur. 2 dargestellt) oder eine zweite Schaltstellung S2 (in Figur 3 angedeutet) verlagerbar und mittels eines federbeaufschlagten Rastelementes 14 wahlweise in der ersten oder der zweiten Schaltstellung S1, S2 arretierbar ist. Dabei ist in der ersten Schaltstellung S1 ein erster Hydraulikanschluss 22 des Umschaltventils 11 mit einem Entlastungsanschluss 26 und in der zweiten Schaltstellung S2 ein zweiter Hydraulikanschluss 24 mit dem Entlastungsanschluss 26 verbunden. Wie bei bekannten Umschaltventilen ist in der ersten Schaltstellung S1 die erste Hydraulikkammer des Pleuels 1 mit der Entlastungsleitung und in der zweiten Schaltstellung S2 die zweite Hydraulikkammer des Pleuels 1 mit der Entlastungsleitung verbunden.

Wie insbesondere Figur 3 zu entnehmen ist, welche einen Längsschnitt des erfindungsgemäßen Umschaltventils 11 zeigt, ist das in dem Ventilgehäuse 12 angeordnete Abgriffselement 13 wahlweise in der ersten Schaltstellung S1 oder der zweiten Schaltstellung S2 arretierbar. Erfindungsgemäß sind das Rastelement 14 und die in dem Rastelement 14 angeordnete Feder 15 wenigstens teilweise in einer quer ausgebildeten Ausnehmung 16 des Abgriffselements 13 angeordnet, wobei das Ventilgehäuse 12 in einer axialen Richtung L eine axial begrenzte erste Nut 17 aufweist, in welcher das Rastelement 14 zur Begrenzung des Schaltweges und zur Verdrehsicherung des Abgriffselements 13 axial verschiebbar angeordnet ist. Die zumindest teilweise Anordnung des Rastelementes 14 in der Ausnehmung 16 ist von Vorteil, da die Führungslänge des beweglichen Rastelementes 14 im Vergleich zu den bekannten Umschaltventilen entscheidend vergrößert werden kann. Die Verkantungs- und Selbsthemmungsneigung kann verringert und ein sicheres Erreichen der Endlagen aus eigener Kraft verbessert werden. Zudem ist die Federauslegung wegen größerer Einbaulänge im Vergleich zum Stand der Technik nicht kritisch.

Das Rastelement 14 dient zusätzlich als Anschlagelement, welches als dadurch zusätzliches Bauteil entfallen kann. Das Rastelement 14 ist mit dem Abgriffselement 13 zusammen axial verschiebbar vorgesehen.

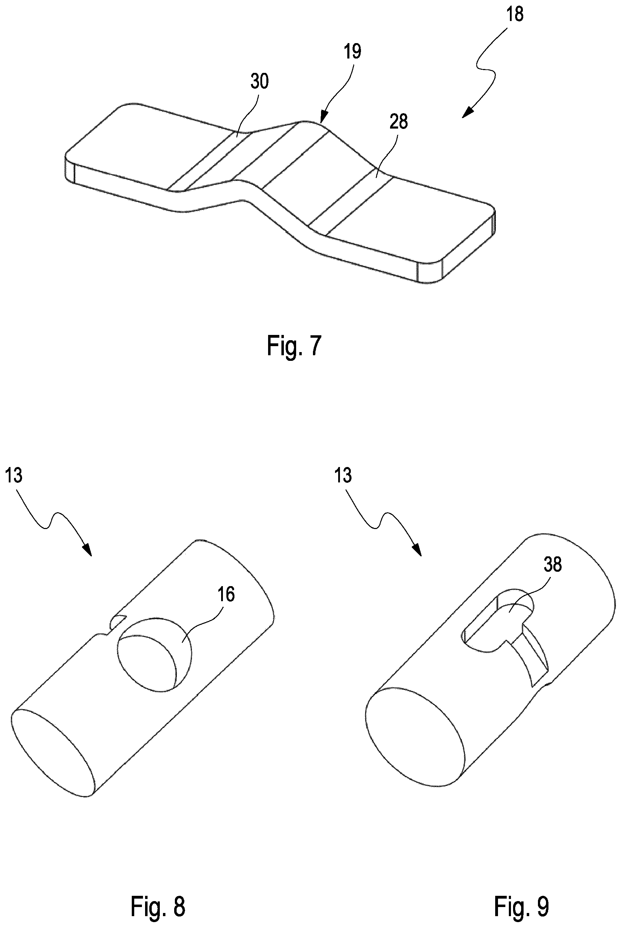

Das Rastelement 14 wirkt mit einem in Figur 7 als Einzelteil dargestellten Rastkonturelement 18 mit einer Rastkontur 19 zusammen, welches im oder am Ventilgehäuse 12 angeordnet ist. Die für die Schaltstellungen S1, S2 notwendige Rastkontur 19 ist damit nicht wie im Stand der Technik am Abgriffselement 13, sondern an einem separaten Bauteil vorgesehen, so dass das Abgriffselement 13 dadurch wesentlich einfacher und kostengünstiger herstellbar ist. Das Rastkonturelement 18 ist ebenfalls einfach und kostengünstig beispielsweise als Stanzbiegeteil ausgebildet. Das Rastkonturelement 18 weist zweckmäßigerweise wenigstens zwei Rastpositionen 28, 30 für das Rastelement 14 auf, mit welchen die zwei Schaltstellungen S1 und S2 des Umschaltventils 11 durch Verschieben des Abgriffselements 13 realisiert werden.

Das Rastelement 14 weist, wie in der Figur 3 im Längsschnitt des Umschaltventils 11 und in Figur 4 im Querschnitt dargestellt ist, eine in einer Rasthülse 32 angeordnete und geführte Feder 15 auf, welche in dem vorhandenen Bauraum gut untergebracht werden kann. Die Feder 15 kann durch die Formgebung der Rasthülse 32 diese punktkontaktförmig berühren. Um die Rastfunktion zu ermöglichen, ist die Rasthülse 32 in der Ausnehmung 16 des Abgriffselements 13 verschiebbar und mit der Feder 15 vorgespannt angeordnet. Die Ausnehmung 16 weist einen Anschlag 34 für die Rasthülse 32 auf, so dass der Verschiebeweg des Rastelements 14 dadurch begrenzt ist. Die Rasthülse 32 kann einfach und kostengünstig als Tiefziehteil ausgebildet sein.

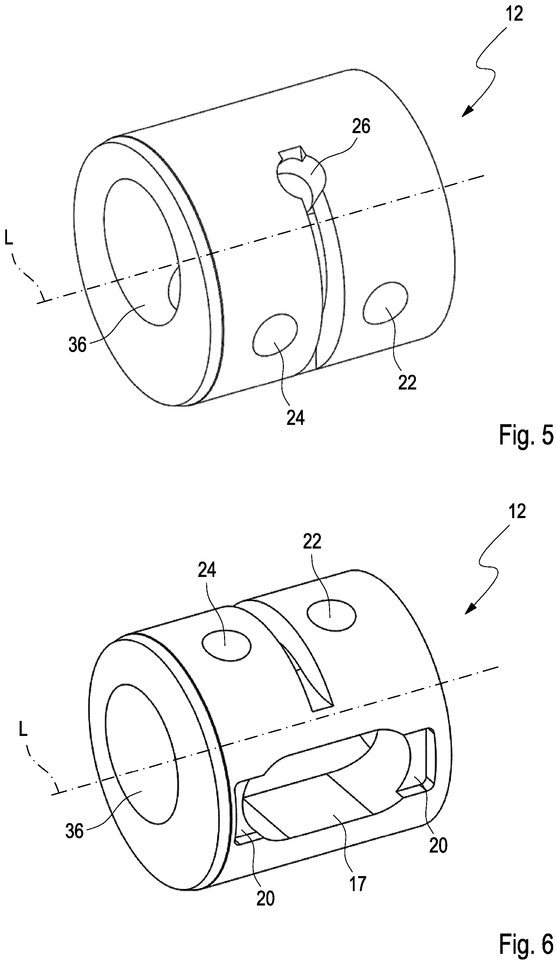

Figur 5 und Figur 6 zeigen das Ventilgehäuse des Umschaltventils 11 aus Figur 2 in isometrischer Darstellung, jeweils in Längsrichtung L um 90° gegeneinander gedreht. Wie in Figur 5 zu erkennen ist, sind in dem Ventilgehäuse 12 ein erster Hydraulikanschluss 22 und ein zweiter Hydraulikanschluss 24 symmetrisch zu einem Entlastungsanschluss 26 angeordnet. Die beiden Hydraulikanschlüsse 22, 24 sind als Bohrungen ausgeführt, während der Entlastungsanschluss 26 als mit einem Schlitz verbundene Bohrung ausgeführt ist. Mittels Verschieben des im Ventilgehäuses 12 angeordneten Abgriffselements 13 kann in den beiden Schaltstellungen S1 und S2 mittels einem auf dem Außenumfang des Abgriffselements 13 angeordneten Schaltkanal 38 (siehe Figur 9) eine hydraulische Verbindung jeweils zwischen einem der beiden Hydraulikanschlüsse 22, 24 und dem Entlastungsanschluss 26 hergestellt werden.

Das in Figur 6 gezeigte Ventilgehäuse 12 weist im Bereich der ersten als Axialnut ausgebildeten Nut 17 an seiner Außenkontur eine zweite Nut 20 auf, in welcher das Rastkonturelement 18 angeordnet ist und welche sich in axialer Länge über die erste Nut 17 hinaus erstreckt, um die ganze Länge der ersten Nut 17 sicher abzudecken. Das Rastkonturelement 18 wird vor der Montage des Umschaltventils 11 lediglich lose in die Nut 20 eingelegt, so dass die Abstützung der Federvorspannung (Kontaktkraft zwischen Rastelement 14 und Rastkonturelement 18) erst im eingebauten Zustand von einer das Ventilgehäuse 12 aufnehmenden Pleuelbohrung übernommen wird. Somit wird die Vorspannung der Feder 15 über das Rastkonturelement 18 erst in einem bestimmungsgemäß montierten Zustand erzeugt. Die zweite Nut 20 sichert das Rastkonturelement 18 gegen ein Verschieben. Aufwendige Befestigungsmaßnahmen für das Rastkonturelement 18 sind somit nicht erforderlich.

Als weiterer Vorteil ist zu nennen, dass durch das Zusammenfassen der Funktionen Rastelement und Anschlagelement die Dichtstrecken der Hydraulikflüssigkeitskanäle im Umschaltventil 11 vergrößert werden können. Die Hydraulikflüssigkeitskanäle für die Abläufe können ferner stark vereinfacht werden.

Figur 7 zeigt das Rastkonturelement 18 des Umschaltventils 11 in isometrischer Darstellung. Das Rastkonturelement 18, das beispielsweise als Stanzbiegeteil ausgeführt sein kann, weist zentral eine Rastkontur 19 auf, welche die zwei Rastpositionen 28, 30 voneinander trennt. Die Rastpositionen 28, 30 können, wie dargestellt, als flache Bereiche des Rastkonturelements 18 zu beiden Seiten der Rastkontur 19 ausgebildet sein. Alternativ können sie auch als Vertiefungen im Rastkonturelement 18 vorgesehen sein. Mit einem solchen Rastkonturelement 18 kann auf einfache Weise eine für die Rastfunktion günstige Steuerkurve vorgesehen werden.

In den Figuren 8 und 9 ist das Abgriffselement 13 des Umschaltventils 11 in isometrischer Darstellung jeweils in Längsrichtung um 90° gegeneinander gedreht dargestellt. In Figur 8 ist zentral im Abgriffselement 13 eine als Bohrung ausgeführte Ausnehmung 16 zu erkennen, in welche das Rastelement 14, insbesondere die Rasthülse 32 mit der Feder 15, eingeschoben werden kann. In Figur 9 ist auf dem Außenumfang des Abgriffselements 13 ein T-förmiger Schaltkanal 38 zu erkennen, welcher beim Verschieben des Abgriffselements 13 im Ventilgehäuse 12 in den Schaltstellungen S1 und S2 jeweils den ersten Hydraulikanschluss 22 oder den zweiten Hydraulikanschluss 24 mit dem Entlastungsanschluss 26 hydraulisch verbindet.

## Patentansprüche

1. Umschaltventil (11) zum Steuern eines Hydraulikflüssigkeitsstroms, mit einem in einem Ventilgehäuse (12) angeordneten Abgriffselement (13), welches wahlweise in eine erste Schaltstellung (S1) oder eine zweite Schaltstellung (S2) verlagerbar und mittels eines federbeaufschlagten Rastelementes (14) wahlweise in der ersten oder der zweiten Schaltstellung (S1, S2) arretierbar ist, wobei in der ersten Schaltstellung (S1) ein erster Hydraulikanschluss (22) mit einem Entlastungsanschluss (26) und in der zweiten Schaltstellung (S2) ein zweiter Hydraulikanschluss (24) mit dem Entlastungsanschluss (26) verbunden ist, wobei ein Schaltweg des Abgriffselements (13) begrenzt vorgesehen ist,
**dadurch gekennzeichnet, dass** das Rastelement (14) wenigstens teilweise in einer Ausnehmung (16) des Abgriffselements (13) angeordnet ist, wobei das Ventilgehäuse (12) in einer axialen Richtung (L) eine axial begrenzte erste Nut (17) aufweist, in welcher das Rastelement (14) axial verschiebbar angeordnet ist.

2. Umschaltventil nach Anspruch 1, **dadurch gekennzeichnet, dass** das Rastelement (13) mit einem Rastkonturelement (18) zusammenwirkt, welches im oder am Ventilgehäuse (12) angeordnet ist.

3. Umschaltventil nach Anspruch 1 oder 2, **dadurch gekennzeichnet, dass** das Rastelement (14) mit dem Abgriffselement (13) axial verschiebbar vorgesehen ist.

4. Umschaltventil nach Anspruch 2 oder 3, **dadurch gekennzeichnet, dass** das Rastkonturelement (18) im Bereich der ersten Nut (17) angeordnet ist.

5. Umschaltventil nach einem der Ansprüche 2 bis 4, **dadurch gekennzeichnet, dass** das Rastkonturelement (18) wenigstens zwei Rastpositionen (28, 30) für das Rastelement (14) aufweist.

6. Umschaltventil nach einem der Ansprüche 2 bis 5, **dadurch gekennzeichnet, dass** das Ventilgehäuse (12) im Bereich der ersten Nut (17) eine zweite Nut (20) aufweist, in welcher das Rastkonturelement (18) angeordnet ist.

7. Umschaltventil nach einem der vorhergehenden Ansprüche, **dadurch gekennzeichnet, dass** das Rastelement (14) eine in einer Rasthülse (32) angeordnete Feder (15) aufweist.

8. Umschaltventil nach Anspruch 7, **dadurch gekennzeichnet, dass** die Rasthülse (32) in der Ausnehmung (16) des Abgriffselements (13) verschiebbar und mit der Feder (15) vorgespannt angeordnet ist.

9. Umschaltventil nach Anspruch 7 oder 8, **dadurch gekennzeichnet, dass** die Ausnehmung (16) einen Anschlag (34) für die Rasthülse (32) aufweist.

10. Umschaltventil nach einem der Ansprüche 2 bis 9, **dadurch gekennzeichnet, dass** das Rastkonturelement (18) sich über wenigstens eine Länge der ersten Nut (17) des Ventilgehäuses (12) erstreckt.

11. Umschaltventil nach einem der Ansprüche 2 bis 10, **dadurch gekennzeichnet, dass** das Rastkonturelement (18) in die zweite Nut (20) lose eingelegt angeordnet ist.

12. Umschaltventil nach einem der Ansprüche 7 bis 11, **dadurch gekennzeichnet, dass** eine Vorspannung der Feder (15) über das Rastkonturelement (18) in einem bestimmungsgemäß montierten Zustand erzeugbar ist.

13. Umschaltventil nach einem der Ansprüche 7 bis 12, **dadurch gekennzeichnet, dass** die Rasthülse (32) als Tiefziehteil ausgebildet ist.

14. Umschaltventil nach einem der Ansprüche 2 bis 13, **dadurch gekennzeichnet, dass** das Rastkonturelement (18) als Stanzbiegeteil ausgebildet ist.

15. Pleuel (1) für eine Brennkraftmaschine mit variabler Verdichtung mit einer Exzenter-Verstelleinrichtung (6) zur Verstellung einer effektiven Pleuelstangenlänge (Leff), wobei ein Verstellweg der Exzenter-Verstelleinrichtung (6) mittels eines Umschaltventils (11) nach einem der vorhergehenden Ansprüche verstellbar ist.

16. Pleuel nach Anspruch 15, wobei die Exzenter-Verstelleinrichtung (6) wenigstens zwei Hydraulikkammern aufweist, wobei in einer ersten Schaltstellung (S1) des Umschaltventils (11) die erste Hydraulikkammer mit einer Entlastungsleitung und in einer zweiten Schaltstellung (S2) des Umschaltventils (11) die zweite Hydraulikkammer mit der Entlastungsleitung verbunden ist.

## Claims

1. Switchover valve (11) for controlling a hydraulic liquid flow, having a pick-off element (13) which is arranged in a valve housing (12) and which is selectively movable into a first switching position (S1) or a second switching position (S2) and which is selectively arrestable in the first or the second switching position (S1, S2) by means of a spring-loaded detent element (14), wherein, in the first switching position (S1), a first hydraulic port (22) is connected to a relief port (26) and, in the second switching position (S2), a second hydraulic port (24) is connected to the relief port (26), wherein a switching travel of the pick-off element (13) is provided in limited form,
**characterized in that** the detent element (14) is arranged at least partially in a recess (16) of the pick-off element (13), wherein the valve housing (12) has, in an axial direction (L), an axially delimited first groove (17) in which the detent element (14) is arranged in axially displaceable fashion.

2. Switchover valve according to Claim 1,
**characterized in that** the detent element (13) interacts with a detent contour element (18) which is arranged in or on the valve housing (12).

3. Switchover valve according to Claim 1 or 2,
**characterized in that** the detent element (14) is provided so as to be axially displaceable with the pick-off element (13).

4. Switchover valve according to Claim 2 or 3,
**characterized in that** the detent contour element (18) is arranged in the region of the first groove (17) .

5. Switchover valve according to any of Claims 2 to 4, **characterized in that** the detent contour element (18) has at least two detent positions (28, 30) for the detent element (14).

6. Switchover valve according to any of Claims 2 to 5, **characterized in that** the valve housing (12) has, in the region of the first groove (17), a second groove (20) in which the detent contour element (18) is arranged.

7. Switchover valve according to any of the preceding claims, **characterized in that** the detent element (14) has a spring (15) arranged in a detent sleeve (32) .

8. Switchover valve according to Claim 7,
**characterized in that** the detent sleeve (32) is arranged so as to be displaceable, and preloaded by means of the spring (15), in the recess (16) of the pick-off element (13).

9. Switchover valve according to Claim 7 or 8,
**characterized in that** the recess (16) has a stop (34) for the detent sleeve (32).

10. Switchover valve according to any of Claims 2 to 9, **characterized in that** the detent contour element (18) extends over at least a length of the first groove (17) of the valve housing (12).

11. Switchover valve according to any of Claims 2 to 10, **characterized in that** the detent contour element (18) is arranged in loosely inserted fashion in the second groove (20).

12. Switchover valve according to any of Claims 7 to 11, **characterized in that** a preload of the spring (15) can be generated by means of the detent contour element (18) in an intended installed state.

13. Switchover valve according to any of Claims 7 to 12, **characterized in that** the detent sleeve (32) is formed as a deep-drawn part.

14. Switchover valve according to any of Claims 2 to 13, **characterized in that** the detent contour element (18) is formed as a punched and bent part.

15. Connecting rod (1) for an internal combustion engine with variable compression, having an eccentric adjustment device (6) for the adjustment of an effective connecting rod length (Leff), wherein an adjustment travel of the eccentric adjustment device (6) is adjustable by means of a switchover valve (11) according to any of the preceding claims.

16. Connecting rod according to Claim 15, wherein the eccentric adjustment device (6) has at least two hydraulic chambers, wherein, in a first switching position (S1) of the switchover valve (11), the first hydraulic chamber is connected to a relief line, and, in a second switching position (S2) of the switchover valve (11), the second hydraulic chamber is connected to the relief line.

## Revendications

1. Soupape de commutation (11) servant à commander un flux de liquide hydraulique, comportant un élément de prise (13) disposé dans un corps de soupape (12) et pouvant être placé au choix dans une première position de commutation (S1) ou bien dans une deuxième position de commutation (S2) et pouvant être bloqué au choix dans la première ou bien la deuxième position de commutation (S1, S2) au moyen d'un élément de balayage (14) sollicité par ressort, un premier raccordement hydraulique (22) étant relié à un raccordement de décharge (26) dans la première position de commutation (S1) et un deuxième raccordement hydraulique (24) étant relié au raccordement de décharge (26) dans la deuxième position de commutation (S2), une course de commutation de l'élément de prise (13) étant prévue de manière limitée,
**caractérisée en ce qu'**au moins une partie de l'élément de balayage (14) est disposée dans un évidement (16) de l'élément de prise (13), le corps de soupape (12) présentant dans une direction axiale (L) une première gorge (17) limitée axialement dans laquelle l'élément de balayage (14) est disposé de manière à pouvoir se déplacer axialement.

2. Soupape de commutation selon la revendication 1,
**caractérisée en ce que** l'élément de balayage (13) agit conjointement avec un élément à contour de balayage (18) disposé dans ou sur le corps de soupape (12).

3. Soupape de commutation selon la revendication 1 ou 2, **caractérisée en ce que** l'élément de balayage (14) est prévu de manière à pouvoir se déplacer axialement avec l'élément de prise (13).

4. Soupape de commutation selon la revendication 2 ou 3, **caractérisée en ce que** l'élément à contour de balayage (18) est disposé dans la région de la première gorge (17).

5. Soupape de commutation selon l'une quelconque des revendications 2 à 4, **caractérisée en ce que** l'élément à contour de balayage (18) présente au moins deux positions de balayage (28, 30) pour l'élément de balayage (14).

6. Soupape de commutation selon l'une quelconque des revendications 2 à 5, **caractérisée en ce que**, dans la région de la première gorge (17), le corps de soupape (12) présente une deuxième gorge (20) dans laquelle est disposé l'élément à contour de balayage (18).

7. Soupape de commutation selon l'une quelconque des revendications précédentes, **caractérisée en ce que** l'élément de balayage (14) comporte un ressort (15) disposé dans une douille de balayage (32).

8. Soupape de commutation selon la revendication 7,
**caractérisée en ce que** la douille de balayage (32) est disposée dans l'évidement (16) de l'élément de prise (13) de manière à pouvoir coulisser et de manière précontrainte par le ressort (15).

9. Soupape de commutation selon la revendication 7 ou 8, **caractérisée en ce que** l'évidement (16) comporte une butée (34) pour la douille de balayage (32).

10. Soupape de commutation selon l'une quelconque des revendications 2 à 9, **caractérisée en ce que** l'élément à contour de balayage (18) s'étend sur au moins une longueur de la première gorge (17) du corps de soupape (12).

11. Soupape de commutation selon l'une quelconque des revendications 2 à 10, **caractérisée en ce que** l'élément à contour de balayage (18) est disposé de manière insérée sans serrage dans la deuxième gorge (20).

12. Soupape de commutation selon l'une quelconque des revendications 7 à 11, **caractérisée en ce qu'**une précontrainte du ressort (15) peut être générée par l'intermédiaire de l'élément à contour de balayage (18) dans un état monté approprié.

13. Soupape de commutation selon l'une quelconque des revendications 7 à 12, **caractérisée en ce que** la douille de balayage (32) est une pièce réalisée par emboutissage profond.

14. Soupape de commutation selon l'une quelconque des revendications 2 à 13, **caractérisée en ce que** l'élément à contour d'emboutissage (18) est une pièce réalisée par pliage au poinçon.

15. Bielle (1) pour un moteur à combustion interne et à compression variable, dotée d'un système de déplacement à excentrique (6) destiné à déplacer une longueur efficace (Leff) de bielle, la course de déplacement du système de déplacement à excentrique (6) pouvant être réglée au moyen d'une soupape de commutation (11) selon l'une quelconque des revendications précédentes.

16. Bielle selon la revendication 15, dans laquelle le système de déplacement à excentrique (6) comporte au moins deux chambres hydrauliques, la première chambre hydraulique étant reliée à une conduite de décharge dans une première position de commutation (S1) de la soupape de commutation (11) et la deuxième chambre hydraulique étant reliée à la conduite de décharge dans une deuxième position de commutation (S2) de la soupape de commutation (11) .
